# EUROPEAN PATENT APPLICATION

(11) **EP 1 916 277 A1**
(43) Date of publication of application: **30.04.2008**
(21) Application number: 06782743.6
(22) Date of filing: 09.08.2006
(51) Int. Cl.: C08L 59/00, C08K 5/10, C08K 5/25, C08K 5/3477

(54) **POLYACETAL RESIN COMPOSITION AND MOLDED RESIN**

(30) Priority: 17.08.2005 JP 2005236769
(71) Applicant: Polyplastics Co., Ltd., Tokyo 108-8280 (JP)
(72) Inventor: WADA, Shogo, Fuji-shi, Shizuoka 4168533 (JP); KURITA, Hayato, Fuji-shi, Shizuoka 4168533 (JP)
(74) Representative: Peel, James Peter
(86) International application number: PCT/JP2006/316064
(87) International publication number: WO 2007/020931

(57) **Abstract**

Provided is a polyoxymethylene resin composition which has excellent molding characteristics (releasing property and molding cycle) and suppresses the generation of formaldehyde. Specifically the polyoxymethylene resin composition is prepared by blending (A) 100 parts by weight of a polyacetal copolymer containing 1 mmol/kg or less of hemiformal terminal, 2 mmol/kg or less of formyl terminal, and 0.5% by weight or less of unstable terminal; (B) 0.01 to 20 parts by weight of one or a mixture of two or more of a guanamine compound (b-1) and a hydrazide compound (b-2); and (C) 0.1 to 5 parts by weight of an ester compound having 50% or more of esterification percentage.

## Description

### Technical Field

The present invention relates to a polyacetal resin composition which has an excellent workability and stability, and significantly suppresses the generation of formaldehyde from a molding of the polyacetal resin composition.

### Background Art

Polyacetal resins (polyoxymethylenes) are used in wide fields including automobile parts, electric and electronic equipment parts, other precision machine parts, construction and piping members, household and cosmetic parts, and medical parts owing to their excellent mechanical properties, anti-fatigue property, anti-friction and anti-wear properties, resistance to chemicals, and moldability. In the movement of widening and diversifying applications of them, however, the requests for their quality become severer than ever.

Specifically in recent years, one of these requirements increasing in severity is to decrease the amount of formaldehyde generated from the polyacetal resin moldings. Thus the market strongly wants to have polyacetal resin materials that can decrease the generation of formaldehyde to an extreme limit.

To answer the requirement, there have been proposed varieties of methods. As for the polyacetal copolymers, for example, the polyacetal resin itself is improved in the stability by decomposing to remove the unstable terminals therein, thus stabilizing the terminals. However, sole decomposition and removal of unstable terminals cannot suppress the decomposition of the resin during extrusion or molding step, and it is difficult to obtain a polyacetal resin material that can considerably decrease the generation of formaldehyde.

In this regard, for preventing the oxidation decomposition of polyacetal resin during extrusion or molding step, there is a known method of blending the resin with a phenol compound having steric hindrance, (hindered phenol), or an amine compound having steric hindrance, (hindered amine). Furthermore, there are known methods of blending the resin with a stabilizer to prevent the thermal decomposition and the like, including: a nitrogen-containing compound such as melamine or a derivative thereof, a polyamide, a polyacrylamide derivative, and an amidine compound; a hydroxide such as an alkali metal and an alkali earth metal; an organic acid salt; and an inorganic acid salt. Normally the antioxidant is used in combination with a heat-resistant stabilizer. With the use of those additives, however, the polyacetal resins are difficult to have high stability, and there is a limitation in decreasing the amount of generated formaldehyde.

Other than above technologies, there is proposed a polyacetal resin composition which does not induce coloration through the improvement in the stability against heat and oxidizing atmosphere by adding an antioxidant, an alkylene urethane, and urea to a polyacetal copolymer, (JP-A 52-59646). However, sole addition of these ingredients is still difficult to significantly suppress the generation of formaldehyde.

For the prevention of thermal decomposition, there are known methods such as the one to blend a polyacetal copolymer with a small amount of an ionic salt of low molecular weight copolymer of α-olefin and α, β-ethylenic unsaturated carboxylic acid, the one to use a cyanoguanidine, a triazine, and the like as the amidine-based stabilizer, (JP-A 61-145245), (the term "JP-A" signifies "Japanese Patent Laid-Open No."), and the one to blend a polyacetal-based rein with a hindered phenol, a metal salt of hydroxycarboxylic acid, a lubricant, a nitrogen-containing thermal stabilizer (an amidine compound such as melamine or cyanoguanidine), a nuclei-forming agent, and an antistatic agent, (JP-A 63-260949).

Although the conventional methods improve thermal stability, mechanical properties, and moldability and workability, those methods are difficult to significantly suppress the generation of formaldehyde, and induce bleeding of additives from the molding, thus raising the problem of being not able to be added in a large amount.

There is a method of depressurizing to deaerate through the vent opening to remove the formaldehyde generated during the decomposition of polyacetal resin in the extrusion step from inside of the resin. The method is difficult to efficiently remove the formaldehyde from inside of the molten resin, which is a viscous material, to obtain a polyacetal resin material containing very little amount of formaldehyde.

Furthermore, from the viewpoint to capture the formaldehyde existing in the polyacetal resin and to suppress the release of the formaldehyde to outside, there is a method of blending a hydrazine compound and the like. The method, however, cannot attain expected effect.

### Disclosure of the Invention

The present invention is to improve the above-described drawbacks of the related art, thus to provide a polyacetal resin composition which has excellent workability and stability, and which significantly suppresses the amount of formaldehyde generated from a molding thereof.

To achieve the above, the inventors of the present invention conducted detail studies, and found that the generation of formaldehyde from the polyacetal resin composition and from the molding thereof can be significantly suppressed by blending a mixture of one or more compound selected from the group consisting of a guanamine compound and a hydrazide compound, and a specific ester with a specific polyacetal resin, thus completing the present invention.

That is, the present invention provides a polyacetal resin composition comprising: (A) 100 parts by weight of a polyacetal copolymer containing 1 mmol/kg or less of a hemiformal terminal, 2 mmol/kg or less of a formyl terminal, and 0.5% by weight or less of an unstable terminal; (B) 0.01 to 20 parts by weight of one or a mixture of two or more of a guanamine compound (b-1) and a hydrazide compound (b-2) ; and (C) 0.1 to 5 parts by weight of an ester compound having 50% or more of an esterification percentage.

The polyacetal resin composition according to the present invention, which is prepared by adding a compound selected from a guanamine compound and a hydrazide compound and an ester compound having high esterification percentage to a polyacetal copolymer having specific characteristics is the one which significantly decreases the amount of generated formaldehyde.

### Detail Description of the Invention

The present invention includes the following preferable embodiments.

The ester compound (C) having 50% or more of esterification percentage is a mixture of one or more compound selected from the group consisting of glycerin-based ester, sorbitan-based ester, pentaerythritol-based ester, propylene glycol-based ester, and higher aliphatic ester.

The resin molding is composed of above polyacetal resin composition.

The present invention is described below in more detail. The polyacetal copolymer (A) used in the present invention essentially contains 1 mmol/kg or less of hemiformal terminal, 2 mmol/kg or less of formyl terminal, and 0.5% by weight or less of unstable terminal. The hemiformal terminal (also called the hemiacetal terminal) is expressed as (-O-CH₂OH), and the formyl terminal (also called the formyloxy terminal) is expressed as (-OCHO).

As for the terminal of polyacetal copolymer, there is formed, other than the above, an alkoxy group such as methoxy group (-OCH₃), or a C2 or higher hydroxyalkyl group such as hydroxyethyl group (-CH₂CH₂OH) and hydroxybutyl group (-CH₂CH₂CH₂CH₂OH).

The methoxy group is formed by, for example, a formal which is a molecular weight adjustor being added in the polymerization step, typically methylal (methylene dimethyl ether).

The C2 or higher hydroxyalkyl group terminal comes from cyclic ether or cyclic formal being used as a comonomer, and is formed by the following steps. On polymerizing a polyacetal resin in which oxyalkylene group coming from cyclic ether or cyclic formal is inserted into the repeated oxymethylene units, the polymerization stops caused by a trace amount of water or the like in the raw material, thus forming the hemiacetal terminal. When a polyacetal resin having hemiacetal terminal is subjected to heat treatment in the presence of an aqueous solution of alkaline substance such as triethylamine aqueous solution, the unstable terminals decompose. The decomposition propagates from the terminal into the main chain, and when the decomposition reaches the position of C2 or higher oxyalkylene unit, the oxyalkylene unit at that position is converted into a stable terminal of hydroxyalkyl group.

If a large amount of hemiacetal terminal as the unstable terminal remains, the formaldehyde is successively released from the hemiacetal terminal during compounding of stabilizer or by the heating during molding, thereby generating formaldehyde.

If a large amount of formyl terminal remains, it is decomposed and converted into hemiacetal terminal during compounding of stabilizer under a severe working condition and by the heating during molding, thereby generating formaldehyde as described above.

The polyacetal copolymer according to the present invention can be manufactured by decreasing the amount of impurities (such as water, methanol, and formic acid) in the polymerization components (monomer structuring the oxymethylene group and copolymerizing component), (specifically by decreasing the water content in the polymerization components to 20 ppm or less, more specifically to 10 ppm or less), thus optimizing the selection of the manufacturing process and the manufacturing conditions, or combining the manufacturing methods.

According to the present invention, the polyacetal copolymer (A) is blended with the component (B) which is a mixture of at least one selected from the guanamine-based component (b-1) and the hydrazide compound (b-2).

Applicable guanamine-based compound (b-1) includes: aliphatic guanamine-based compound such as monoguanamines (such as valeroguanamine, caproguanamine, heptanoguanamine, capryloguanamine, or stearoguanamine), or alkylenebis-guanamines (such as succinoguanamine, glutaroguamaine, adipoguanamine, pimeloguanamine, suberoguanamine, azeloguanamine, or sebacoguanamine); alicyclic guanamine-based compound such as monoguanamines (such as cyclohexane carboguanamine, norbornene carboguanamine, cyclohexene carboguanamine, norbornane carboguanamine, and their functional group-substituted compound (such as derivatives in which one to three functional groups such as alkyl group, hydroxy group, amino group, acetoamino group, nitryl group, carboxyl group, alkoxycarbonyl group, carbamoyl group, alkoxy group, phenyl group, cumyl group, or hydroxyphenyl group are substituted by cycloalkane residue)); aromatic guanamine-based compound such as monoguanamines (such as benzoguanamine and benzoguanamine substituted at the functional group (such as a derivative in which one to five functional groups such as alkyl group, hydroxy group, amino group, acetoamino group, nitryl group, carboxy group, alkoxy carbonyl group, carbamoyl group, alkoxy group, phenyl group, cumyl group, or hydroxyphenyl group are substituted by phenyl residue of benzoguanamine: for example, o-, m-, or p-toluguanamine, o-, m-, or p-xyloguanamine, o-, m-, or p-phenylbenzoguanamine, o-, m-, or p-hydroxybenzoguanamine, 4-(4'-hydroxyphenyl)benzoguanamine, o-, m-, or p-nitrylbenzoguanamine, 3,5-dimethyl-4-hydroxybenzoguanamine, or 3,5-di-t-butyl-4-hydroxybenzoguanamine), α-, or β-naphthoguanamime and its derivative substituted at the functional group), polyguanamines (such as phthaloguanamine, isophthaloguanamine, terephthaloguanamine, naphthalene diguanamine, or biphenylene diguanamine), or aralkyl or aralkylene guanamines (such as phenylacetoguanamine, β-phenylpropyoguanamine, or o-, m-, or p-xylylene bisguanamine); hetero-atom containing guanamine-based compound such as acetal group-containing guanamines (such as 2,4-diamino-6-(3,3-dimethoxypropyl-s-triazine), dioxane ring-containing guanamines (such as [2-(4',6'-diamino-s-triazine-2'-yl)ethyl]-1,3-dioxane, or [2-(4',6'-diamino-s-triazine-2'-yl)ethyl]-4-ethyl-4-hydroxymethyl-1,3-dioxane), tetraoxospiro ring-containing guanamines (such as CTU-guanamine or CMTU-guanamine), isocyanuric ring-containing guanamines (such as 1,3,5-tris[2-(4',6'-diamino-s-triazine-2'-yl)ethyl]isocyanu rate, or 1,3,5-tris[3-(4',6'-diamino-s-triazine-2'-yl)-propyl]isocyanurate), imidazoyl ring-containing guanamines (such as guanamine compounds described in JP-A 6-179671 and JP-A 7-10871), imidazole ring-containing guanamines (such as guanamine compounds described in JP-A 47-41120, JP-A 3-284675 and JP-A 7-33766, or guanamine compound described in JP-A 2000-154181). Furthermore, there are included compounds of the above guanamine-based compounds in which the alkoxymethyl group therein is substituted by amino group, (for example, mono~tetra methoxymethyl benzoguanamines and mono~octa methoxymethyl CTU-guanamines). As of these, specifically preferred ones are benzoguanamine and CTU-guanamine. Furthermore, there may be composed of at least one of them.

Applicable hydrazide compound (b-2) includes aliphatic dihydrazide carboxylate (such as dihydrazide adipate, dihydrazide sebacate, 7,11-octadecadiene-1,18-dicarbohydrazide, 1,3-bis(hydrazinocarbonoethyl)-5-isopropylhydantoin), or aromatic hydrazide (such as 2,6-dihydrazide naphthoate or dihydrazide isophthalate).

According to the present invention, the adding amount of the mixture of one or more compound selected from the guanamine compound (b-1) and the hydrazide compound (b-2), which mixture is added as the component (B), is in a range from 0.01 to 20 parts by weight, preferably from 0.1 to 10 parts by weight to 100 parts by weight of the polyacetal copolymer (A).

If the added amount of these compounds as the component (B) is excessively small, the generation of formaldehyde cannot be prevented. If the amount thereof is excessively large, they may bleed out from the polyacetal resin composition and may deteriorate the stability in molding of the resin composition.

According to the present invention, the polyacetal copolymer (A) is further blended with an ester compound (C) having 50% or higher esterification percentage.

The ester compound (C) having 50% or higher esterification percentage, used in the present invention, is the one which is prepared by the reaction between alcohol and fatty acid, and in which 50% or more of hydroxyl groups in the alcohol ingredient is esterified.

If an ester compound of less than 50% of esterification percentage is used, the effect of suppressing the generation of formaldehyde becomes significantly poor even when the compound is used together with the component (B).

Applicable alcohol ingredients structuring the ester include: polyhydric alcohol such as diethylene glycol, triethylene glycol, propylene glycol, dipropylene glycol, butane diol, pentane diol, hexane diol, glycerin, diglycerin, triglycerin, threitol, erythritol, pentaerythritol, arabitol, ribitol, xylitol, sorbite, sorbitane, sorbitol, or mannitol; and C16 or higher saturated aliphatic alcohol. Examples of the C16 or higher saturated aliphatic alcohol are cetyl alcohol, stearyl alcohol, isostearyl alcohol, behenyl alcohol, erucyl alcohol, hexyldecyl alcohol, and octyldodecyl alcohol.

Applicable fatty acids include capric acid, lauric acid, myristic acid, palmitic acid, stearic acid, arachidic acid, behenic acid, montanic acid, lignoceric acid, myristoreic acid, palmitoleic acid, oleic acid, linolic acid, linolenic acid, ricinolic acid, 12-hydroxystearic acid, sebacic acid, dimer acid, and natural fatty acid containing above compounds as ingredients, or a mixture of them.

As of these components (C), preferably used ones include 2-substitution ester and 3-substitution ester of glycerin, 2,3,4-substitution ester of pentaerythritol, 2,3-substitution ester of sorbitan, and 2-substitution of ethyleneglycol, specifically glycerin distearate, glycerin tristearate, glycerin tri-di-12-hydroxystearate, glycerin tribehenate, pentaerythritol tetrastearate, and ethyleneglycol distearate. The ester of saturated aliphatic alcohol includes stearylstearate, behenylbehenate, distearyladipate, and distearylphthalate. In the present invention, one or more compound selected from the above esters is preferred.

The mixing amount of the ester compound (C) according to the present invention is in a range from 0.1 to 5 parts by weight, preferably from 0.2 to 1 part by weight, to 100 parts by weight of the polyacetal copolymer (A).

Combined use of the ester compound (C) with the component (B) significantly suppresses the generation of formaldehyde. If the mixing ratio of the ester compound (C) is excessively small, the moldability deteriorates and further the effect to suppress the generation of formaldehyde becomes insufficient. If the mixing ratio thereof is excessively large, the ester compound (C) bleeds out from the polyacetal resin, which may deteriorate the moldability and workability and deteriorate the surface quality of the molding.

The polyacetal resin applied to the present invention may further contain varieties of known additives. Examples of the additives are many kinds of coloring matter, nucleating agent, antistatic agent, other surfactant, and various polymers. There can be added one or more of known fillers such as inorganic, organic, and metallic fillers in fiber, sheet, powder, or granular shape, within a range that they do not significantly deteriorate the molding performance which is the object of the present invention. Examples of these fillers are glass fiber, glass beads, talc, mica, wollastonite, and carbon fiber, though the filler is not limited to them.

There is no specific limitation on the preparation method for the composition and the molding of the composition according to the present invention, and these can be easily prepared by a known apparatus and known method which are conventionally and commonly applied as the method for preparing the resin composition and the molding of the resin composition. For example, (i) a method in which the respective components are blended, and then the blend is kneaded and extruded using an extruder to prepare the pellets, which pellets are then molded, (ii) a method in which the respective pellets having different compositions from each other are prepared, and specific amounts of the respective pellets are mixed to mold, and then the molding having a target composition is obtained; and (iii) a method in which one or more kinds of the components are directly charged to the molding machine. Furthermore, a method in which a portion of the resin component is pulverized to fine powder, which is then mixed with other components before being added, is a preferable method for assuring uniform mixing of these components.

The resin composition according to the present invention can be molded by any of extrusion molding, injection molding, compression molding, vacuum molding, blow molding, and foam molding.

### Examples

The present invention is described below in detail referring to the examples. However, the present invention is not limited to these examples.

The following Examples and Comparative Example adopted the indexes for the effect in terms of the amount of formaldehyde generated from the moldings prepared by dry process and by wet process. These indexes were measured as described below.

### <Amount of formaldehyde generated from the molding prepared by dry process>

From the pellets of polyacetal resin composition prepared in Examples and Comparative Examples, respectively, the specimens having a size of 2 mm x 2 mm x 50 mm were molded by injection molding process. Ten pieces of the specimens (each about 2.7 g was accurately weighed) were placed in a 20 ml vessel to seal. The vessel with the specimens was heated in a thermostat at 80°C for 24 hours. After that, the vessel was taken out from the thermostat and was allowed to standing to cool to room temperature. Then, 5 ml of distilled water was poured into the vessel using a syringe, thus letting the distilled water absorb the formaldehyde generated from the specimens. The amount of the formaldehyde in the aqueous solution was determined in accordance with the method of JIS K0102.29 (the subject of formaldehyde), and the generated amount of formaldehyde per unit mass of the specimen, (µg/g), was calculated.

### <Amount of formaldehyde generated from the molding prepared by wet process>

Injection molding was applied to the pellets of polyacetal resin composition prepared in Examples and in Comparative Examples to form the respective specimens in sheet shape, having a size of 100 mm x 40 mm x 2 mm. Two pieces of the specimens in sheet shape (each about 22g was accurately weighed) were hung down from the lid of polyethylene bottle (1 liter of capacity) containing 50 ml of distilled water. The bottle was sealed and was allowed to standing in a thermostat at 60°C for 3 hours, followed by allowing to standing at room temperature for 1 hour. The amount of formaldehyde which was generated from the specimen in sheet shape and was absorbed into the distilled water in the polyethylene bottle was determined in accordance with the method of JIS K0102.29 (the subject of formaldehyde), and the generated amount of formaldehyde per unit mass of the specimen, (µg/g), was calculated.

The polyacetal copolymer, the guanamine compound (b-1), the hydrazide compound (b-2), and the ester-based compound used in Examples and in Comparative Examples are the following.

### 1. Polyacetal copolymer

(a-1): Polyacetal copolymer (amount of hemiformal terminal = 2.5 mmol/kg, amount of formyl terminal = 1.7 mmol/kg, amount of unstable terminal = 0.63% by weight, and Melt index = 9 g/10 min).
(a-2): Polyacetal copolymer (amount of hemiformal terminal containing 0.03% by weight of triethyleneglycol bis[3-(3-t-butyl-5-methyl-4-hydroxyphenyl)propionate] = 0.35 mmol/kg, amount of formyl terminal = 0.7 mmol/kg, amount of unstable terminal = 0.23% by weight, and Melt index = 9 g/10 min).

The polyacetal copolymers (a-1) and (a-2) were prepared by the following procedure.

A twin-screw polymerization apparatus equipped with jacket was used while introducing hot water at 80°C into the jacket and rotating the two screw shafts at a speed of 100 rpm. To the reactor, there were continuously charged 0.03% by weight of triethyleneglycol[3-(3-t-butyl-5-methyl-4-hydroxyphenyl)propionate] as the antioxidant, 3.3% by weight of 1,3-dioxolan as the comonomer, and 700 ppm (by weight) of trioxane containing methylal as the chain transfer agent. Simultaneously, there were continuously added a solution of trifluorinated boron dibutyletherat in cyclohexane, (1% by weight of concentration) in an amount of 10 ppm (by weight) as the trifluorinated boron to the total amount of monomers (trioxane and 1,3-dioxolane), thus conducting copolymerization. The applied trioxane contained 48 ppm of water and 32 ppm of formic acid. Then, the crude polyacetal copolymer discharged from the discharge opening of the reactor was added to an aqueous solution containing 0.1% by weight of triethylamine, thus deactivating the catalyst. The resulted mixture was treated by centrifugal separation, and further by drying, and thereby obtained the crude polyacetal copolymer.

To 100 parts by weight of the crude polyacetal copolymer, there were added 0.03 parts by weight of triethyleneglycol[3-(3-t-butyl-5-methyl-4-hydroxyphenyl)-propionate] and 1000 ppm of triethylamine aqueous solution as the decomposition agent, to homogeneously mix together.

Subsequently, thus prepared mixture was charged to a twin-screw extruder (30 mm in diameter) having one vent opening. The mixture was then melted and kneaded in the extruder under 2.7 kPa (20 mmHg) of vent vacuum, 200°C of cylinder temperature, and 300 sec of average retention time, while removing the evaporated matter from the vent opening, and thus obtained the stabilized polyacetal copolymer (a-1) in pellet shape.

Similar to above, polymerization and stabilization were given except that the applied trioxane was purified to decrease the water content to 7 ppm and the formic acid to 4 ppm, and thereby obtained the stabilized polyacetal copolymer (a-2).

The amounts of hemiformal terminal and formyl terminal in the polyacetal copolymer were determined in accordance with the method described in JP-A 2001-11143 using FT-NMR Model AVANCE400 manufactured by Bruker.

The Melt index was derived in accordance with ASTM-D1238 under the condition of 190°C and 2160 g.

### 2. Guanamine compound and hydrazide compound

(b-1-1): Melamine
(b-1-2): CTU-guanamine
(b-1-3): Benzoguanamine
(b-2): Hydrazide sebacate

### 3. Ester-based compound

Ester compound compatible with the specification of the present invention
(c-1) : Glycerin tristearate (Esterification percentage =100%)
(c-2): Glycerin distearate (Esterification percentage = 66%)
(c-3): Glycerin dioleate monoacetate (Esterification percentage = 100%)
(c-4): Pentaerythritol tetrastearate (Esterification percentage = 100%)
(c-5): Propyleneglycol monostearate (Esterification percentage = 50%)
(c-6): Stearyl stearate (Esterification percentage = 100%)
   Ester compound which is not compatible with the specification of present invention
(c-7) : Glycerin monostearate (Esterification percentage = 33%)
(c-8) : Glycerin monobehenate (Esterification percentage = 33%)
(c-9): Pentaerythritol monostearate (Esterification percentage = 25%)
(c-10): Sorbitan monostearate (Esterification percentage = 25%)
(c-11): Glycerin (Esterification percentage = 0%)
(C-12): Stearyl alcohol (Esterification percentage = 0%)

The esterification percentage was determined based on the structure. For comparison, alcohols which were not esterified were also tested.

### Examples 1 to 11, Comparative Examples 1 to 11

There were blended 100 parts by weight of the polyacetal copolymer having the characteristics specified by the present invention with a guanamine compound and an ester compound having 50% or higher esterification percentage at the respective blending ratios given in Table 1. The mixture was charged to the main feeder opening of a twin screw (30 mm in diameter) equipped with one vent opening, thus melting and kneading the mixture under the extrusion condition of L/D = 35, temperature of 200°C, screw rotational speed of 100 rpm, vent vacuum of 70 cmHg, discharge rate of 15 kg/hr, and retention time of 100 sec, thereby obtaining a composition in pellet shape.

For comparison, similar procedure to above was applied to prepare the pellets of the respective compositions: namely, the composition which did not contain guanamine compound and ester compound, the composition which did not contain ester compound and contained only guanamine compound, the composition using ester compound having less than 50% of esterification percentage and alcohol instead of the ester compound having 50% or higher esterification percentage, and the composition which used a polyacetal copolymer that did not satisfy the characteristics specified by the present invention.

Injection molding was applied to these pellets to form the specified respective specimens, with which the amount of formaldehyde generated therefrom was evaluated. The result is given in Table 1.

The specimen using the ester compound of less than 50% of esterification percentage inversely affected the amount of generated formaldehyde. The specimen using the ester compound of 50% or higher esterification percentage, however, significantly affected the reduction in the generated formaldehyde.

Although the table does not include, the case of not adding the ester compound but adding only guanamine compound showed poor releasing property during molding and poor anti-deposition (MD) on the mold, further resulted in unfavorable molding cycle.

**Table 1**

| | (A) Polyacetal resin | | (B) Guanamine (b-1) | | (C) Ester compound | | | Amount of generated formaldehyde | |
|---|---|---|---|---|---|---|---|---|---|
| | Kind | Weight parts | Kind | Weight parts | Kind | EsterificatIon percentage (%) | Weight parts | Dry process | Wet process |
| Example 1 | a-2 | 100 | b-1-1 | 0.1 | c-1 | 100 | 0.2 | 66.8 | 25.0 |
| Example 2 | a-2 | 100 | b-1-2 | 0.3 | c-1 | 100 | 0.2 | 28.6 | 15.4 |
| Example 3 | a-2 | 100 | b-1-3 | 0.3 | c-1 | 100 | 0.2 | 17.9 | 6.1 |
| Example 4 | a-2 | 100 | b-1-3 | 0.5 | c-1 | 100 | 0.2 | 13.2 | 5.4 |
| Example 5 | a-2 | 100 | b-1-3 | 1.0 | c-1 | 100 | 0.2 | 8.5 | 4.7 |
| Example 6 | a-2 | 100 | b-1-3 | 0.3 | c-2 | 66 | 0.2 | 16.9 | 5.8 |
| Example 7 | a-2 | 100 | b-1-3 | 0.3 | c-3 | 100 | 0.2 | 15.3 | 5.4 |
| Example 8 | a-2 | 100 | b-1-3 | 0.3 | c-4 | 100 | 0.2 | 16.4 | 5.3 |
| Example 9 | a-2 | 100 | b-1-3 | 0.3 | c-5 | 50 | 0.2 | 16.8 | 5.5 |
| Example 10 | a-2 | 100 | b-1-3 | 0.3 | c-1 | 100 | 0.05 | 19.2 | 8.5 |
| Example 11 | a-2 | 100 | b-1-3 | 0.3 | c-1 | 100 | 0.5 | 14.9 | 5.3 |
| Comparative Example 1 | a-2 | 100 | - | - | - | - | - | 71.5 | 27.2 |
| Comparative Example 2 | a-2 | 100 | b-1-1 | 0.1 | - | - | - | 68.0 | 19.8 |
| Comparative Example 3 | a-2 | 100 | b-1-2 | 0.3 | - | - | - | 35.3 | 18.1 |
| Comparative Example 4 | a-2 | 100 | b-1-3 | 0.3 | - | - | - | 19.8 | 8.9 |
| Comparative Example 5 | a-2 | 100 | b-1-3 | 0.3 | c-7 | 33 | 0.2 | 20.3 | 13.2 |
| Comparative Example 6 | a-2 | 100 | b-1-3 | 0.3 | c-8 | 33 | 0.2 | 22.5 | 14.8 |
| Comparative Example 7 | a-2 | 100 | b-1-3 | 0.3 | c-9 | 25 | 0.2 | 28.5 | 16.8 |
| Comparative Example 8 | a-2 | 100 | b-1-3 | 0.3 | c-10 | 25 | 0.2 | 28.9 | 12.3 |
| Comparative Example 9 | a-2 | 100 | b-1-3 | 0.3 | c-11 | 0 | 0.2 | 27.6 | 11.8 |
| Comparative Example 10 | a-2 | 100 | b-1-3 | 0.3 | c-12 | 0 | 0.2 | 30.3 | 17.1 |
| Comparative Example 11 | a-1 | 100 | b-1-3 | 0.3 | c-1 | 100 | 0.2 | 45.1 | 20.3 |

### Examples 12 to 20, Comparative Examples 12 to 20

There were blended 100 parts by weight of the polyacetal copolymer having the characteristics specified by the present invention with a hydrazide compound and an ester compound having 50% or higher esterification percentage at the respective blending ratios given in Table 2. The mixture was charged to the main feeder opening of a twin screw (30 mm in diameter) equipped with one vent opening, thus melted and kneaded the mixture under the extrusion condition of L/D = 35, extrusion temperature of 200°C, screw rotational speed of 100 rpm, vent vacuum of 70 cmHg, discharge rate of 15 kg/hr, and retention time of 100 sec, thereby obtained a composition in pellet shape.

For comparison, similar procedure as above was applied to prepare the pellets of the respective compositions: namely, the composition which did not contain hydrazide compound and ester compound, the composition which did not contain ester compound and contained only hydrazide compound, the composition using ester compound having less than 50% of esterification percentage and alcohol instead of the ester compound having 50% or higher esterification percentage, and the composition which used a polyacetal copolymer that did not satisfy the characteristics specified by the present invention.

Injection molding was applied to these pellets to form the specified respective specimens, with which the amount of formaldehyde generated therefrom was evaluated. The result is given in Table 2.

The specimen using the ester compound of less than 50% of esterification percentage inversely affected the amount of generated formaldehyde. The specimen using the ester compound of 50% or higher esterification percentage, however, significantly affected the reduction in the amount of generated formaldehyde.

Although the table does not contain, the case of not adding the ester compound but adding only hydrazide compound showed poor releasing property during molding and poor anti-deposition (MD) on the mold, further resulted in unfavorable molding cycle.

**Table 2**

| | (A) Polyacetal resin | | (B) Guanamine (b-1) | | (C) Ester compound | | | Amount of generated formaldehyde | |
|---|---|---|---|---|---|---|---|---|---|
| | Kind | Weight parts | Kind | Weight parts | Kind | Esterification percentage (%) | Weight parts | Dry process | Wet process |
| Example 12 | a-2 | 100 | b-2 | 0.1 | c-1 | 100 | 0.2 | 0.4 | 0.2 |
| Example 13 | a-2 | 100 | b-2 | 0.2 | c-1 | 100 | 0.2 | 0.2 | 0.1 |
| Example 14 | a-2 | 100 | b-2 | 0.5 | c-1 | 100 | 0.2 | 0.2 | 0.06 |
| Example 15 | a-2 | 100 | b-2 | 0.1 | c-2 | 66 | 0.2 | 0.6 | 0.4 |
| Example 16 | a-2 | 100 | b-2 | 0.1 | c-3 | 100 | 0.2 | 0.5 | 0.3 |
| Example 17 | a-2 | 100 | b-2 | 0.1 | c-4 | 100 | 0.2 | 0.6 | 0.5 |
| Example 18 | a-2 | 100 | b-2 | 0.1 | c-5 | 50 | 0.2 | 0.6 | 0.5 |
| Example 19 | a-2 | 100 | b-2 | 0.1 | c-1 | 100 | 0.05 | 0.7 | 0.4 |
| Example 20 | a-2 | 100 | b-2 | 0.1 | c-1 | 100 | 0.5 | 0.3 | 0.2 |
| Comparative Example 12 | a-2 | 100 | - | - | - | - | - | 71.5 | 27.2 |
| Comparative Example 13 | a-2 | 100 | b-2 | 0.1 | - | - | - | 0.7 | 0.4 |
| Comparative Example 14 | a-2 | 100 | b-2 | 0.1 | c-7 | 33 | 0.2 | 1.2 | 0.7 |
| Comparative Example 15 | a-2 | 100 | b-2 | 0.1 | c-8 | 33 | 0.2 | 1.5 | 0.8 |
| Comparative Example 16 | a-2 a- | 100 | b-2 | 0.1 | c-9 | 25 | 0.2 | 1.8 | 1.0 |
| Comparative Example 17 | a-2 | 100 | b-2 | 0.1 | c-10 | 25 | 0.2 | 1.7 | 1.1 |
| Comparative Example 18 | a-2 | 100 | b-2 | 0.1 | c-11 | 0 | 0.2 | 2.0 | 1.1 |
| Comparative Example 19 | a-2 | 100 | b-2 | 0.1 | c-12 | 0 | 0.2 | 2.2 | 1.3 |
| Comparative Example 20 | a-1 | 100 | b-2 | 0.1 | c-1 | 100 | 0.2 | 4.2 | 2.3 |

## Claims

1. A polyacetal resin composition comprising: (A) 100 parts by weight of a polyacetal copolymer containing 1 mmol/kg or less of a hemiformal terminal, 2 mmol/kg or less of a formyl terminal, and 0.5% by weight or less of an unstable terminal; (B) 0.01 to 20 parts by weight of one or a mixture of two or more of a guanamine compound (b-1) and a hydrazide compound (b-2); and (C) 0.1 to 5 parts by weight of an ester compound having 50% or more of an esterification percentage.

2. The polyacetal resin composition as in claim 1, wherein the guanamine compound (b-1) is selected from an aromatic guanamine-based compound and a tetraoxospiro ring-containing guanamine-based compound.

3. The polyacetal resin composition as in claim 1, wherein the guanamine compound (b-1) is selected from CTU-guanamine and benzoguanamine.

4. The polyacetal resin composition as in claim 1, wherein the hydrazide compound (b-2) is selected from an aliphatic dihydrazide carboxylate-based compound and an aromatic hydrazide-based compound.

5. The polyacetal resin composition as in claim 1, wherein the hydrazide compound (b-2) is dihydrazide sebacate.

6. The polyacetal resin composition as in any of claims 1-5, wherein the (C) ester compound having 50% or more of esterification percentage is one or a mixture of two or more compound selected from the group consisting of glycerin-based ester, sorbitan-based ester, pentaerythritol-based ester, propylene glycol-based ester, and higher aliphatic ester.

7. A molded article, composed of the polyacetal resin composition of any of claims 1-6.
